# EUROPEAN PATENT SPECIFICATION

(11) **EP 2 389 510 B1**
(45) Date of publication and mention of the grant of the patent: **03.04.2013**
(21) Application number: 10700872.4
(22) Date of filing: 20.01.2010
(51) Int. Cl.: F03D 7/02

(54) **CONTROL OF A WIND TURBINE ROTOR DURING A STOP PROCESS USING PITCH AND A SURFACE ALTERING DEVICE**
STEUERUNG EINES WINDTURINENROTORS WÄHREND EINES STOPPPROZESSES MIT PITCH- UND OBERFLÄCHENVERÄNDERNDER VORRICHTUNG
COMMANDE D'UN ROTOR D'EOLIENNE AU COURS D'UN PROCESSUS D'ARRET PAR TANGAGE ET DISPOSITIF DE MODIFICATION DE SURFACE

(30) Priority: 22.01.2009 DK 200900101; 22.01.2009 US 146443 P
(43) Date of publication of application: 30.11.2011
(73) Proprietor: Vestas Wind Systems A/S, 8200 Aarhus N (DK)
(72) Inventor: ABDALLAH, Imad, DK-8000 Aarhus C (DK); WESTERGAARD, Carsten Hein, DK-1124 København K (DK); NIELSEN, Thomas S. Bjertrup, DK-8940 Randers (DK)
(86) International application number: PCT/EP2010/050637
(87) International publication number: WO 2010/084131

(56) References cited:
- EP-A1- 1 719 910
- EP-A2- 1 701 034
- US-A- 4 692 095
- US-A1- 2003 075 929

## Description

### TECHNICAL FIELD

The present invention relates to a method for controlling a wind turbine rotor during a stop process thereof from an operating state, e.g. to a stand-still state, such as during an emergency stop process. The invention further relates to a wind turbine, which is adapted to control the wind rotor during such a stop process. Further, the invention relates to a method for dampening the oscillation of a tower of a wind turbine during operation or during a stop process thereof.

### BACKGROUND OF THE INVENTION

It is well-known that the blades of a pitch-regulated or active stall regulated wind turbine when it is stopped are pitched to a feathered parking position where one edge of the blade is directed towards the wind turbine tower and another edge is directed away form the tower, so that aerodynamic forces from the wind on the blades will not cause harm to the wind turbine. Such stops are performed for maintenance of the turbine as well as for emergency stop of the operation of the wind turbine due for instance to malfunction of the turbine itself or due to irregularities on the electrical grid which may cause the wind turbine to halt the emission of active power to the grid, such as a severe reduction of the grid voltage or due to rotor overspeed in extreme gust situation, etc.

A rapid pitching of the blades may cause harm to the blades and to the wind turbine. European patent application EP 1 701 034 discloses a method of stooping the rotor of a wind turbine where account is taken to reduce the pendulum motion of the wind turbine tower that is caused when the positive thrust on the rotor during normal operation providing a deflection of the tower in the downwind direction is replaced by a negative thrust when the blades are pitched towards the parking position, so that the tower when moving towards the wind from the deflected position is accelerated towards the wind direction, causing a huge bending moment on the base of the tower. This is counteracted by pitching with a high angle speed of e.g. 15°/s until the tower is about its vertical position and then reduce the angle speed to e.g. 5°/s or even 0°/s until the extreme position of the tower in the upwind direction is reached, where after the high angle speed is resumed until the parking position of the blades is reached.

Generally, the present invention seeks to reduce large bending moments at the bottom of the tower and to reduce large loads in the outer section of the blade due to the whipping effect introduced by the high frequency blade mode shapes. These undesirable effects may e.g. occur when pitching is performed at a high rate resulting in negative lift (i.e. negative thrust, also referred to as thrust in the upwind direction) as the tower moves forward.

### OBJECT OF THE INVENTION

It is an object of embodiments of the present invention to provide a stop process of the wind turbine where the extreme bending moment applied to the wind turbine tower is reduced. It is a further object of embodiments of the invention to provide a method for controlling or dampening oscillations of the wind turbine tower during power-generating operation or during a stop process of the wind turbine.

### SUMMARY OF THE INVENTION

It has been found by the present inventor(s) that trailing edge flaps at the blades of the wind turbine may be used to achieve the aforementioned objects.

So, in a first aspect the present invention provides a method for controlling a wind turbine during a stop process thereof from an operating state, the wind turbine comprising:
- a rotor comprising a hub and at least one rotor blade supported by the hub, the blade being pitchable with respect to the hub and comprising a main blade body and at least surface altering device, which is movable with respect to the main blade body in order to alter the aerodynamic surface of the blade;
- a tower supporting the hub;
wherein, in the operating state, the tower is deflected in a downwind direction due to the aerodynamic thrust force on the rotor, the method for controlling the stop process comprising:
- moving the surface altering device in a direction, which alleviates the aerodynamic load on the rotor, whereby the tower under most circumstances will start to move forward in the upwind direction; and
- pitching the blades at a first rate to further alleviate the aerodynamic load on the rotor.

The invention also provides a wind turbine comprising:
- a rotor comprising a hub and at least one rotor blade supported by the hub, the blade being pitchable with respect to the hub and comprising a main blade body and at least one surface altering device, which is movable with respect to the main blade body in order to alter the aerodynamic surface of the blade;
- a tower supporting the hub, wherein, in the operating state, the tower is deflected in a downwind direction due to the aerodynamic thrust force on the rotor;
- a control system for controlling the blade pitching and the movement of the surface altering device, the control system being configured to, during a stop process of the wind turbine from an operating state:
   - move the at surface altering device in a direction, which alleviates the aerodynamic load on the rotor; and
   - pitch the blades at a first rate to further alleviate the aerodynamic load on the rotor.

It should be understood that, in the present context, the term 'pitch' or 'pitching' means rotating or twisting the blade around a longitudinal axis, so as to cause a change of the aerodynamic angle of attack. Herein, the term 'positive pitching' means pitching of the blade in order to reduce the aerodynamic forces.

It will be appreciated that the provision of an actively movable surface altering device allows the aerodynamic surface of the wind turbine blades to be modified, in order to increase or decrease the aerodynamic thrust on the rotor. The surface altering device may e.g. include flaps at the trailing or leading edge of the blade, or any other element for altering the aerodynamic surface properties of the blade, such as ailerons or activatable/deactivatable vortex generators, or means for changing the lengthwise or chordwise dimensions of the blade.

Generally, the surface altering device is used augment the pitch mechanism on a wind turbine blade, thereby reducing the demand and design constraints and requirements of the pitch system, and consequently reducing the cost of energy. The provision of a surface altering device additionally allows the stop process to be carried out swiftly and yet gently, and it allows active dampening control of tower oscillations.

In one embodiment the surface altering device comprises at least one trailing edge flap. The step of moving the at least one surface altering device in a direction, which alleviates the aerodynamic load on the rotor, may in that case comprise the step of moving the trailing edge flap towards the suction side of the blade. A movement of the trailing edge flap into the suction side of the blades generally results in a thrust decrease, as the flap in such a position reduces aerodynamic lift or even acts as a spoiler.

The pitching of the blades and the movement of the surface altering device may occur simultaneously or in any order. However, with a view to swiftly and gently initiating the stop process, the step of moving the surface altering device preferably occurs simultaneously with or prior to the step of pitching.

Preferably, after the surface altering device has been moved to alleviate the load, it can be adjusted to achieve a dampening effect on the movement of the tower, in particular a dampening effect on the tower's movement in the downwind direction. For example. While the rotor blade is positively pitched, the surface altering device may be adjusted to achieve an aerodynamic dampening effect against the direction of movement of the tower for a while to prevent the aerodynamic thrust from aggravating the pendulum movement of the tower. Thereby, the loads in the outer part of the blade and the bending moments of the tower root are reduced, leading to reduced risk of wind turbine tower and blade failure, prolongation of the life time of the wind turbine tower and blade and the possibility of erecting wind turbine towers of less reinforcement at the tower root.

The present invention provides a gentle and effective way of controlling tower and blade load, e.g. in safety situations, and of dampening tower oscillations. As blades become longer and more flexible, the effectiveness of pitch to reduce dynamic loads is diminished as the pitch needs to propagate from the root to the outer part of the blade, whereas a surface altering device, such as flaps, provides immediate change in dynamic load. Further, a high pitch rate demand is not a prerequisite for the present invention, and the pitch system requirements and pitch loads are hence reduced compared to a wind turbine blade solely controlled by a pitching system.

In a further aspect, the invention provides a method for dampening the oscillation of a tower of a wind turbine during operation or during a stop process thereof, the wind turbine comprising said tower and a rotor comprising a hub and at least one rotor blade supported by the hub, the blade being pitchable with respect to the hub and comprising a main blade body and at least one surface altering device, which is movable with respect to the main blade body in order to alter the aerodynamic surface of the blade, the method comprising the steps of:
- controlling operation of the wind turbine by controlling the pitch angle of the blades;
- dampening oscillation of the tower in upwind and downwind directions by:
   - moving the at least one surface altering device in a direction, which alleviates the aerodynamic load on the rotor, if the tower's movement in the downwind direction is to be counteracted;
   - moving the at least one surface altering device in a direction, which increases the aerodynamic load on the rotor, if the tower's movement in the upwind direction is to be counteracted.

Accordingly, the surface altering device is used as an active means for dampening tower oscillations.

In particular, the surface altering device may comprise a trailing edge flap, and, the movement of which into towards the suction side of the blade decrease aerodynamic load on the rotor, whereas movement of the trailing edge flap towards the pressure side of the blade increases the aerodynamic load on the rotor.

### LEGENDS TO THE FIGURE

Fig. 1 illustrates the lift coefficient as a function of angle of attack α in an embodiment of a method according to the present invention;
Fig. 2 illustrates pitch angel θ, thrust T, and tower position Z as a function of time in said embodiment according to the invention;
Fig. 3 illustrates tower positions in said embodiment of the invention.

### DETAILED DISCLOSURE OF EMBODIEMENTS THE INVENTION

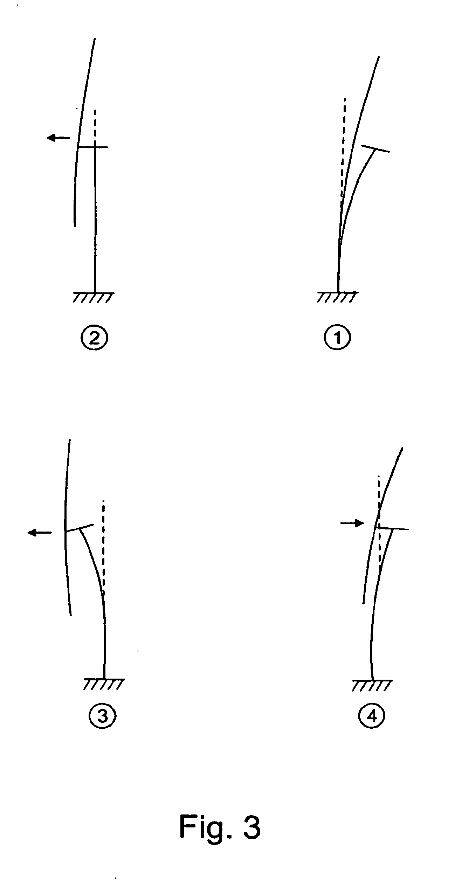

Under normal operation, the tower is bent backwards (downwind) under the influence of positive aerodynamic thrust, as shown in position 1 of Fig. 3.

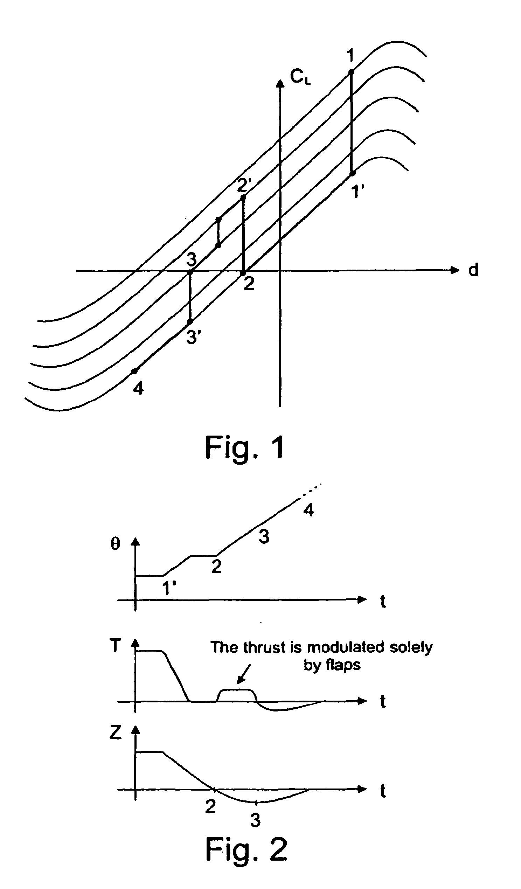

When a safety stop is required, the trailing edge flaps are flapped towards the suction side, whereby the blade section operational state changes from 1 to 1', see Figs 1 and 2. An immediate de-loading (load dump) effect is provided on the rotor, reducing the need for an initial high-speed positive pitching (as is usually the case for pitch regulated turbines). In case a plurality of trailing edge flaps are provided along a length of each blade, the deflections of the individual flaps may be individually controllable and adjusted as required by each section along the span of the blade. From position 1' to 2, positive blade pitching is further introduced to immediately reduced the thrust to approximately zero, the tower starts to gradually move forward (upwind), at which point the positive pitching is induced to further reduce the rotor acceleration and avoid overspeed. Under the influence of its elasticity, the tower will as a reaction to the reduced thrust force move forward (upwind).

The movement of the tower towards the direction of the wind will continue until the extreme deflection position is reached and the tower top is found at position 3 (Fig. 3). In traditional stop strategies from stage 2 to 3, if the blade positive pitching is substantially continued, under the influence of negative thrust, the tower forward movement is further accelerated upwind, causing a large bending moment on the tower base. In the present invention, however, blade pitching may be further continued albeit preferably at a reduced rate but at the same time the trailing edge flaps may be gradually flapped towards the pressure side resulting in a net positive lift and consequently marginally positive thrust, which provides a dampening effect to the tower movement, the blade pitching being augmented by the deflection of the trailing edge flaps. The result is a reduction of the tower top deflection amplitude and tower bottom bending moment. The flapping movement may be adjusted as per the demand of each section along the span of the blade. This also results in a further reduction in loads in the outer part of the blade, i.e. in reduction of the whipping effect introduced by the high frequency blade mode shapes.

Hereafter, the movement of the tower is in the downwind direction, from position 3 to 4 in the drawings, and the tower will gain pass the upright, vertical position. This backwards movement is dampened by the trailing edge flap deflection towards the suction side (transition from position 3 to 3'), resulting in negative lift forces, i.e. negative thrust, at which point the positive pitching is induced to stop the rotor.

Embodiments of the present invention may generally include the following features and provide the functions set forth below:
- Subsequent to the step of pitching the blades and while maintaining the blade in a pitched state or maintaining a pitch rate of the blade, the at least one surface altering device may be moved to increase the aerodynamic load on the rotor, while the tower is moving in the upwind direction, and preferably when the tower has passed a vertical position with respect to ground, so as to provide positive thrust and thereby dampen the tower's movement in the upwind direction. For example, if the surface altering device comprises a trailing edge flap, it may be moved towards the pressure side of the blade to increase the aerodynamic load on the rotor. Simultaneously, the blade pitch may be maintained at a second rate, which is lower than the first rate.
- Subsequent to the step of moving the surface altering device to increase aerodynamic load on the rotor, the surface altering device may be moved to alleviate the aerodynamic load on the rotor, while the tower ins moving in the downwind direction, preferably when the tower has passed through the extreme deflection position in the upwind direction and has passed the vertical position, so as to provide negative thrust and thereby dampen the tower's movement in the downwind direction. For example, if the surface altering device comprises a trailing edge flap, the aerodynamic load on the rotor may be alleviated by moving the flap towards the suction side of the blade. Positive pitching of the blades may then be induced to stop the rotor when the tower is moving in a downwind direction.
- The at least one trailing edge flap may comprise a plurality of individually controllable trailing edge flaps arranged in the lengthwise direction of the blade from the hub to a tip thereof, i.e. in the spanwise direction of the blade. The flaps may be individually controlled, so as to meet the demands of each section along the span of the blade. In particular, the individually controllable flaps may be used to reduce the loads in an outer part of the blade towards the tip portion thereof. Likewise, other types of individually controllable surface altering devices may be used.
- The pitch and flap movement control may be carried out at least on the basis of a measure of the tower shape, deflection or load. For example, the control system of the wind turbine may be configured to receive input signals from a first strain gauge system arranged to provide a measure of the tower shape, defection or load, the first strain gauge system being arranged on the tower.
- Alternatively or in addition, the pitch and flap movement control may be carried out at least on the basis of a measure of blade shape, deflection or load. The control system may hence e.g. be configured to receive input signals from a second strain gauge system arranged to provide a measure of the shape, deflection or load of the blades.
- Further, the pitch and flap movement control is carried out at least on the basis of a tower position, velocity or acceleration. For example, the control system may be configured to receive input signals from an accelerometer or GPS system arranged on or at the tower, the accelerometer or GPS system being provided on or at the tower.

## Claims

1. A method for controlling a wind turbine during a stop process thereof from an operating state, the wind turbine comprising:
- a rotor comprising a hub and at least one rotor blade supported by the hub, the blade being pitchable with respect to the hub and comprising a main blade body and at least one surface altering device, which is movable with respect to the main blade body in order to alter the aerodynamic surface of the blade;
- a tower supporting the hub;
wherein, in the operating state, the tower is deflected in a downwind direction due to the aerodynamic thrust force on the rotor, the method for controlling the stop process comprising:
- moving the at least one surface altering device in a direction, which alleviates the aerodynamic load on the rotor; and
- pitching the blades at a first rate to further alleviate the aerodynamic load on the rotor.

2. A method according to claim 1, wherein the surface altering device comprises at least one trailing edge flap, and wherein said step of moving the at least one surface altering device in a direction, which alleviates the aerodynamic load on the rotor, comprises the step of moving the trailing edge flap towards the suction side of the blade.

3. A method according to claim 2, comprising, subsequent to the step of pitching the blades and while maintaining the blade in a pitched state or maintaining a pitch rate of the blade, the further step of moving the surface altering device to increase the aerodynamic load on the rotor, while the tower is moving in the upwind direction, so as to provide positive thrust and thereby dampen the tower's movement in the upwind direction.

4. A method according to claim 3, wherein the blade pitch is maintained at a second rate, which is lower than said first rate, during said step of moving the surface altering device to increase the aerodynamic load.

5. A method according to claim 3 or 4, comprising, subsequent to the step of moving the surface altering device to increase the aerodynamic load, the further step of moving the at least one surface altering device to alleviate the aerodynamic load on the rotor, when the tower has passed through the extreme deflection position in the upwind direction and while the tower is moving in the downwind direction, so as to provide negative thrust and thereby dampen the tower's movement in the downwind direction.

6. A method according to claim 5, wherein positive pitching of the blades is induced to stop the rotor when the tower is moving in a downwind direction.

7. A method according to any of the preceding claims, wherein said at least one surface altering device comprises a plurality of individually controllable surface altering devices arranged in the lengthwise direction of the blade from the hub to a tip thereof, and wherein the method comprises the step of individually controlling the devices during said step of moving the at least one surface altering device.

8. A method according to claim 6, wherein the individual controllable devices are used to reduce the loads in an outer part of the blade towards the tip portion thereof.

9. A wind turbine comprising:
- a rotor comprising a hub and a at least one blade supported by the hub, the blade being pitchable with respect to the hub and comprising a main blade body and at least one surface altering device, which is movable with respect to the main blade body in order to alter the aerodynamic surface of the blade;
- a tower supporting the hub, wherein, in the operating state, the tower is deflected in a downwind direction due to the aerodynamic thrust force on the rotor;
- a control system for controlling the blade pitching and the movement of the surface altering device, the control system being configured to, during a stop process of the wind turbine from an operating state:
- move the surface altering device in a direction, which alleviates the aerodynamic load on the rotor; and
- pitch the blades at a first rate to further alleviate the aerodynamic load on the rotor.

10. A wind turbine according to claim 9, wherein the surface altering device comprises at least one trailing edge flap.

11. A wind turbine according to claim 9 or 10, wherein the control system is configured to receive input signals from a first strain gauge system arranged to provide a measure of the tower shape, deflection or load, the first strain gauge system being arranged on the tower.

12. A wind turbine according to any of claims 9-11, wherein the control system is configured to receive input signals from a second strain gauge system arranged to provide a measure of the shape, deflection or load of the at least one blade.

13. A wind turbine according to any of claims 9-12, wherein the control system is configured to receive input signals from an accelerometer or GPS system arranged on or at the tower, the accelerometer or GPS system being provided on or at the tower.

14. A method for dampening the oscillation of a tower of a wind turbine during operation or during a stop process thereof, the wind turbine comprising said tower and a rotor comprising a hub and at least one rotor blade supported by the hub, the blade being pitchable with respect to the hub and comprising a main blade body and at least one surface altering device, which is movable with respect to the main blade body in order to alter the aerodynamic surface of the blade, the method comprising the steps of:
- controlling operation of the wind turbine by controlling the pitch angle of the blade;
- dampening oscillation of the tower in upwind and downwind directions by:
- moving the at least one surface altering device in a direction, which alleviates the aerodynamic load on the rotor, if the tower's movement in the downwind direction is to be counteracted;
- moving the at least one surface altering device in a direction, which increases the aerodynamic load on the rotor, if the tower's movement in the upwind direction is to be counteracted.

## Patentansprüche

1. Verfahren zum Steuern einer Windturbine während eines Haltevorgangs von dieser, ausgehend von einem Betriebszustand, wobei die Windturbine Folgendes umfasst:
- einen Rotor, der eine Nabe und wenigstens ein von der Nabe getragenes Rotorblatt umfasst, wobei das Blatt relativ zur Nabe pitch-steuerbar ist und einen Hauptblattteil und wenigstens eine oberflächen-verändernde Vorrichtung umfasst, die relativ zum Hauptblattteil beweglich ist, um die aerodynamische Oberfläche des Blatts zu verändern;
- einen Turm, der die Nabe trägt;
wobei im Betriebszustand der Turm aufgrund der aerodynamischen Schubkraft auf den Rotor mit einer Windrichtung ausgelenkt wird und wobei das Verfahren zum Steuern des Haltevorgangs Folgendes umfasst:
- Bewegen der wenigstens einen oberflächen-verändernden Vorrichtung in einer Richtung, die die aerodynamische Belastung auf dem Rotor verringert; und
- Ausführen einer Pitch-Bewegung der Blätter mit einer ersten Geschwindigkeit, um die aerodynamische Belastung auf dem Rotor weiter zu verringern.

2. Verfahren nach Anspruch 1, wobei die oberflächen-verändernde Vorrichtung wenigstens eine Austrittskantenklappe umfasst und wobei der Schritt zum Bewegen der wenigstens einen oberflächen-verändernden Vorrichtung in einer Richtung, die die aerodynamische Belastung auf dem Rotor verringert, einen Schritt zum Bewegen der Austrittskantenklappe in Richtung der Saugseite des Blatts umfasst.

3. Verfahren nach Anspruch 2, das, nachfolgend auf den Schritt zum Ausführen einer Pitch-Bewegung der Blätter und während das Blatt in einem pitchausgelenkten Zustand gehalten oder eine Pitch-Geschwindigkeit des Blatts beibehalten wird, den weiteren Schritt umfasst, die oberflächen-verändernde Vorrichtung zu bewegen, um die aerodynamische Belastung auf dem Rotor zu erhöhen, und dies während der Turm sich gegen die Windrichtung bewegt, um eine positive Schubkraft bereitzustellen und dadurch die Bewegung des Turms gegen die Windrichtung zu dämpfen.

4. Verfahren nach Anspruch 3, wobei die Pitch-Bewegung des Blatts während des Schritts zum Bewegen der oberflächen-verändernden Vorrichtung zum Erhöhen der aerodynamischen Belastung bei einer zweiten Geschwindigkeit gehalten wird, die niedriger ist als die erste Geschwindigkeit.

5. Verfahren nach Anspruch 3 oder 4, das, nachfolgend auf den Schritt zum Bewegen der oberflächen-verändernden Vorrichtung zum Erhöhen der aerodynamischen Belastung, den weiteren Schritt umfasst, die wenigstens eine oberflächen-verändernde Vorrichtung zu bewegen, um die aerodynamische Belastung auf dem Rotor zu verringern, wenn der Turm die extreme Auslenkungsposition gegen die Windrichtung überschritten hat und während der Turm sich in Windrichtung bewegt, um eine negative Schubkraft bereitzustellen und dadurch die Bewegung des Turms mit der Windrichtung zu dämpfen.

6. Verfahren nach Anspruch 5, wobei eine positive Pitch-Bewegung der Blätter herbeigeführt wird, um den Rotor zu stoppen, wenn der Turm sich in einer Windrichtung bewegt.

7. Verfahren nach einem der vorhergehenden Ansprüche, wobei die wenigstens eine oberflächen-verändernde Vorrichtung mehrere einzeln steuerbare oberflächen-verändernde Vorrichtungen umfasst, die in Längsrichtung des Blatts von der Nabe zu einer Spitze von diesem angeordnet sind, und wobei das Verfahren den Schritt umfasst, die Vorrichtungen während des Schritts zum Bewegen der wenigstens einen oberflächen-verändernden Vorrichtung einzeln zu steuern.

8. Verfahren nach Anspruch 6, wobei die einzeln steuerbaren Vorrichtungen dazu verwendet werden, die Belastungen in einem außenliegenden Teil des Blatts, in Richtung von dessen Spitzenabschnitt, zu verringern.

9. Windturbine, Folgendes umfassend:
- einen Rotor, der eine Nabe und wenigstens ein von der Nabe getragenes Blatt umfasst, wobei das Blatt relativ zur Nabe pitch-steuerbar ist und einen Hauptblattteil und wenigstens eine oberflächen-verändernde Vorrichtung umfasst, die relativ zum Hauptblattteil beweglich ist, um die aerodynamische Oberfläche des Blatts zu verändern;
- einen Turm, der die Nabe trägt, wobei im Betriebszustand der Turm aufgrund der aerodynamischen Schubkraft auf den Rotor in einer Windrichtung ausgelenkt wird;
- ein Steuerungssystem zum Steuern der Pitch-Bewegung der Blätter und der Bewegung der oberflächen-verändernden Vorrichtung, wobei das Steuerungssystem dafür eingerichtet ist, während eines Haltevorgangs der Windturbine, ausgehend von einem Betriebszustand, Folgendes auszuführen:
- Bewegen der oberflächen-verändernden Vorrichtung in einer Richtung, die die aerodynamische Belastung auf dem Rotor verringert; und
- Ausführen einer Pitch-Bewegung der Blätter mit einer ersten Geschwindigkeit, um die aerodynamische Belastung auf dem Rotor weiter zu verringern.

10. Windturbine nach Anspruch 9, wobei die oberflächen-verändernde Vorrichtung wenigstens eine Austrittskantenklappe umfasst.

11. Windturbine nach Anspruch 9 oder 10, wobei das Steuerungssystem dafür eingerichtet ist, Eingangssignale von einem ersten Dehnungsmesssystem zu empfangen, das dafür eingerichtet ist, eine Messung der Form, Auslenkung oder Belastung des Turms bereitzustellen, wobei das erste Dehnungsmesssystem am Turm angebracht ist.

12. Windturbine nach einem der Ansprüche 9 bis 11, wobei das Steuerungssystem dafür eingerichtet ist, Eingangssignale von einem zweiten Dehnungsmesssystem zu empfangen, das dafür eingerichtet ist, eine Messung der Form, Auslenkung oder Belastung des wenigstens einen Blatts bereitzustellen.

13. Windturbine nach einem der Ansprüche 9 bis 12, wobei das Steuerungssystem dafür eingerichtet ist, Eingangssignale von einem Beschleunigungsmesser oder einem GPS-System zu empfangen, der oder das auf oder am Turm angebracht ist, wobei der Beschleunigungsmesser oder das GPS-System auf oder am Turm vorgesehen ist.

14. Verfahren zum Dämpfen der Schwingung eines Turms einer Windturbine während des Betriebs oder während eines Haltevorgangs von dieser, wobei die Windturbine den Turm umfasst sowie einen Rotor, der eine Nabe und wenigstens ein von der Nabe getragenes Rotorblatt umfasst, wobei das Blatt relativ zur Nabe pitch-steuerbar ist und einen Hauptblattteil und wenigstens eine oberflächen-verändernde Vorrichtung umfasst, die relativ zum Hauptblattteil beweglich ist, um die aerodynamische Oberfläche des Blatts zu verändern, wobei das Verfahren die folgenden Schritte umfasst:
- Steuern des Betriebs der Windturbine durch das Steuern des Pitch-Winkels des Blatts;
- Dämpfen der Schwingung des Turms gegen die Windrichtung und in der Windrichtung durch Folgendes:
- Bewegen der wenigstens einen oberflächen-verändernden Vorrichtung in einer Richtung, die die aerodynamische Belastung auf dem Rotor verringert, falls der Bewegung des Turms mit der Windrichtung entgegengewirkt werden soll;
- Bewegen der wenigstens einen oberflächen-verändernden Vorrichtung in einer Richtung, die die aerodynamische Belastung auf dem Rotor erhöht, falls der Bewegung des Turms gegen die Windrichtung entgegengewirkt werden soll.

## Revendications

1. Procédé de commande d'une éolienne au cours d'un processus d'arrêt de celle-ci depuis un état de fonctionnement, l'éolienne comprenant :
- un rotor comprenant un moyeu et au moins une pale de rotor soutenue par le moyeu, la pale pouvant tanguer par rapport au moyeu et comprenant un corps de pale principal et au moins un dispositif de modification de surface, qui est mobile par rapport au corps de pale principal afin de modifier la surface aérodynamique de la pale ;
- une tour soutenant le moyeu ;
dans lequel, à l'état de fonctionnement, la tour dévie dans le sens du vent en raison de la force de poussée aérodynamique exercée sur le rotor, le procédé de commande du processus d'arrêt comprenant :
- le déplacement du ou des dispositifs de modification de surface dans une direction, ce qui réduit la charge aérodynamique exercée sur le rotor ; et
- le tangage des pales à une première vitesse afin de réduire encore la charge aérodynamique exercée sur le rotor.

2. Procédé selon la revendication 1, dans lequel le dispositif de modification de surface comprend au moins un volet de bord de fuite, et dans lequel ladite étape de déplacement du ou des dispositifs de modification de surface dans une direction, ce qui réduit la charge aérodynamique exercée sur le rotor, comprend l'étape consistant à déplacer le volet de bord de fuite vers le côté aspiration de la pale.

3. Procédé selon la revendication 2, comprenant, après l'étape de tangage des pales et tout en maintenant la pale dans un état tangué ou en maintenant une vitesse de tangage de la pale, l'étape supplémentaire consistant à déplacer le dispositif de modification de surface afin d'augmenter la charge aérodynamique exercée sur le rotor, tandis que la tour se déplace contre le vent, de manière à fournir une poussée positive et à freiner ainsi le déplacement de la tour contre le vent.

4. Procédé selon la revendication 3, dans lequel le tangage de pale est maintenu à une seconde vitesse, qui est inférieure à ladite première vitesse, au cours de ladite étape de déplacement du dispositif de modification de surface afin d'augmenter la charge aérodynamique.

5. Procédé selon la revendication 3 ou 4, comprenant, après l'étape de déplacement du dispositif de modification de surface afin d'augmenter la charge aérodynamique, l'étape supplémentaire consistant à déplacer la ou les dispositifs de modification de surface afin de réduire la charge aérodynamique exercée sur le rotor, lorsque la tour est passée par la position de déviation extrême contre le vent et tandis que la tour se déplace dans le sens du vent, de manière à fournir une poussée négative et à freiner ainsi le déplacement de la tour dans le sens du vent.

6. Procédé selon la revendication 5, dans lequel un tangage positif des pales est provoqué afin d'arrêter le rotor lorsque la tour se déplace dans le sens du vent.

7. Procédé selon l'une quelconque des revendications précédentes, dans lequel ledit ou lesdits dispositifs de modification de surface comprennent plusieurs dispositifs de modification de surface pouvant être commandés individuellement, agencés dans le sens de la longueur de la pale depuis le moyeu jusqu'à une extrémité de celle-ci, et dans lequel le procédé comprend l'étape consistant à commander individuellement les dispositifs au cours de ladite étape de déplacement du ou des dispositifs de modification de surface.

8. Procédé selon la revendication 6, dans lequel les dispositifs pouvant être commandés individuellement sont utilisés pour réduire les charges dans une partie extérieure de la pale vers la partie extrémité de celle-ci.

9. Eolienne comprenant :
- un rotor comprenant un moyeu et au moins une pale soutenue par le moyeu, la pale pouvant tanguer par rapport au moyeu et comprenant un corps de pale principal et au moins un dispositif de modification de surface, qui est mobile par rapport au corps de pale principal afin de modifier la surface aérodynamique de la pale ;
- une tour soutenant le moyeu, dans laquelle, à l'état de fonctionnement, la tour dévie dans le sens du vent en raison de la force de poussée aérodynamique exercée sur le rotor ;
- un système de commande destiné à commander le tangage de pale et le déplacement du dispositif de modification de surface, le système de commande étant configuré, au cours d'un processus d'arrêt de l'éolienne depuis un état de fonctionnement, pour :
- déplacer le dispositif de modification de surface dans une direction, ce qui réduit la charge aérodynamique exercée sur le rotor ; et
- faire tanguer les pales à une première vitesse afin de réduire encore la charge aérodynamique exercée sur le rotor.

10. Eolienne selon la revendication 9, dans laquelle le dispositif de modification de surface comprend au moins un volet de bord de fuite.

11. Eolienne selon la revendication 9 ou 10, dans laquelle le système de commande est configuré pour recevoir des signaux d'entrée depuis un premier système de jauge de contrainte conçu pour fournir une mesure de la forme, de la déviation ou de la charge de la tour, le premier système de jauge de contrainte étant agencé sur la tour.

12. Eolienne selon l'une quelconque des revendications 9 à 11, dans laquelle le système de commande est configuré pour recevoir des signaux d'entrée depuis un second système de jauge de contrainte conçu pour fournir une mesure de la forme, de la déviation ou de la charge de la ou des pales.

13. Eolienne selon l'une quelconque des revendications 9 à 12, dans laquelle le système de commande est configuré pour recevoir des signaux d'entrée depuis un accéléromètre ou système GPS agencé sur la tour ou au niveau de celle-ci, l'accéléromètre ou système GPS étant disposé sur la tour ou au niveau de celle-ci.

14. Procédé de freinage de l'oscillation d'une tour d'une éolienne au cours du fonctionnement ou au cours d'un processus d'arrêt de celle-ci, l'éolienne comprenant ladite tour et un rotor comprenant un moyeu et au moins une pale de rotor soutenue par le moyeu, la pale pouvant tanguer par rapport au moyeu et comprenant un corps de pale principal et au moins un dispositif de modification de surface, qui est mobile par rapport au corps de pale principal afin de modifier la surface aérodynamique de la pale, le procédé comprenant les étapes consistant à :
- déplacer le ou les dispositifs de modification de surface dans une direction, ce qui réduit la charge aérodynamique exercée sur le rotor, si le déplacement de la tour dans le sens du vent doit être contré ;
- déplacer le ou les dispositifs de modification de surface dans une direction, ce qui augmente la charge aérodynamique exercée sur le rotor, si le déplacement de la tour contre le vent doit être contré.
